# EUROPEAN PATENT SPECIFICATION

(11) **EP 1 814 255 B1**
(45) Date of publication and mention of the grant of the patent: **09.05.2012**
(21) Application number: 05772864.4
(22) Date of filing: 08.08.2005
(51) Int. Cl.: H04L 9/00, H04L 29/06, H04L 12/28

(54) **SYSTEM AND METHOD FOR REALIZING THE SECURITY MANAGEMENT IN 3G MOBILE COMMUNICATION NETWORK**
SYSTEM UND VERFAHREN ZUR REALISIERUNG DER SICHERHEITSVERWALTUNG IM 3G-MOBILKOMMUNIKATIONSNETZ
SYSTEME ET PROCEDE POUR LA GESTION DE SECURITE SUR UN RESEAU MOBILE 3G

(30) Priority: 08.08.2004 CN 200410071798
(43) Date of publication of application: 01.08.2007
(73) Proprietor: Huawei Technologies Co., Ltd., Longgang District, Shenzhen Guangdong 518129 (CN)
(72) Inventor: YANG, Li, Shenzhen, Guangdong 518129 (CN)
(74) Representative: Körber, Martin Hans
(86) International application number: PCT/CN2005/001214
(87) International publication number: WO 2006/015537

(56) References cited:
- WO-A2-02/47250
- US-A1- 2002 141 401
- US-A1- 2002 176 423
- US-A1- 2004 098 618
- 3GPP: "3rd Generation Partnership Project; Technical Specification Group Services and System Aspects; Telecommunication Management; Security Management (SM) Integration Reference Point (IRP): Information Service (Release 6)", , February 2004 (2004-02), XP002631876, Retrieved from the Internet: URL:http://www.3gpp.org/ftp/tsg_sa/WG5_TM/ TSGS5_37bis/Docs/ [retrieved on 2011-04-07]
- 3GPP: "3rd Generation Partnership Project;Technical Specification Group Services and System Aspects; Telecommunication Management;Security Management: Security Management: Concepts and Requirements; (Release 6)", , July 2003 (2003-07), XP002631875, Retrieved from the Internet: URL:www.arib.org.jp/IMT-2000/v810Jul10/5-a ppendix/Rel6/32/32600-600.pdf [retrieved on 2011-04-04]
- "1", 3GPP DRAFT; S5-046363 RESUBMISSION S5-046200 HUAWEI WT01 ISSUES RELATED TO ITF-N TRANSPORT FOR SECURITY IRP, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG5, no. Sophia Antipolis, France; 20040321, 21 March 2004 (2004-03-21), XP050298686, [retrieved on 2004-03-21]

## Description

### FIELD OF THE INVENTION

The present invention relates to the network security management technology, and more particularly, to a system and a method for implementing security management in a 3G mobile communication network.

### BACKGROUND OF THE INVENTION

Along with the rapid development of mobile communication network, the 3G mobile communication is gradually becoming the development object and mainstream. The 3G mobile communication mainly includes the WCDMA technique, the CDMA2000 technique and the TD-SCDMA technique. The network management is necessary for operating the 3G mobile communication network economically, efficaciously, reliably and in security. A special System and Architecture 5 (SA5) group is responsible for the network management of 3G Partnership Project (3GPP).

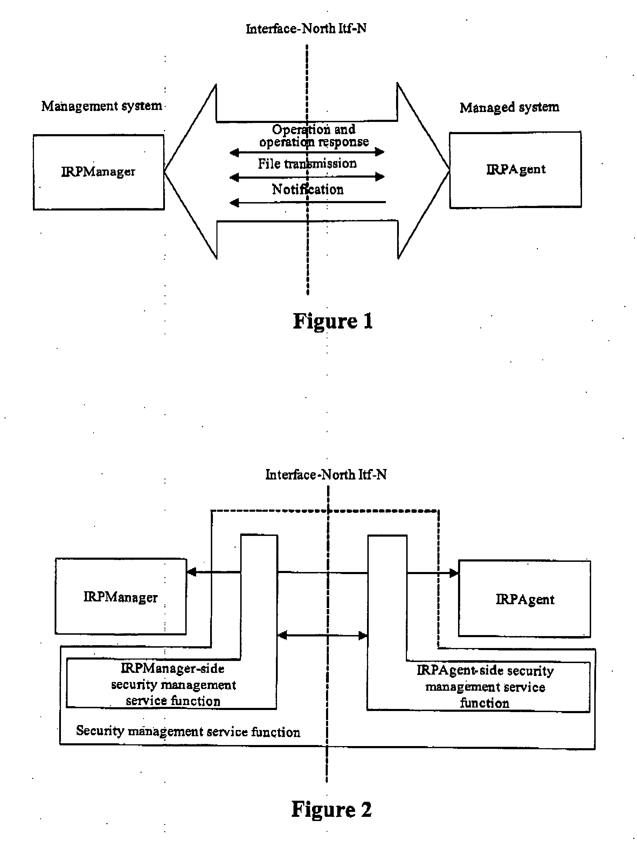

At present, the document 3GPP: "3^{rd} Generation Partnership Project; Technical Specification Group Services and System Aspects; Telecommunications Management; Security Management (SM) Integration Reference Point (IRP): Information Service (Release 6)" and the document 3GPP: "3^{rd} Generation Partnership Project; Technical Specification Group Services and System Aspects; Telecommunications Management; Security Management: Concepts and Requirements; (Release 6)" (3GPP SA5) set forth a kind of network management architecture. As shown in Figure 1, the architecture includes a management system and a managed system. Interfaces between the management system and the managed system are given the reference name Interface-North (Itf-N). The Itf-N function of 3GPP SA5 is implemented by several Integration Reference Points (IRPs), in which the requester of IRP function is referred to as IRP Manager (IRPManager) and the implementation of IRP function is called IRP Agent (IRPAgent). That is, there may be several pairs of IRPManager and IRPAgent. The IRPManager and IRPAgent interact with each other via the Itf-N. The relationship between an IRPManager and an IRPAgent is described in Figure 1 by taking a pair of the IRPManager and the IRPAgent as an example. The IRPManager may send a management request to the IRPAgent to request the IRPAgent to implement an operation, and may receive an operation response and an internal network event report, i.e. a notification from the IRPAgent. The IRPAgnet directly manages a Network Element (NE), receives the management request from the IRPManager and returns the operation response to the IRPManager. Alternatively, the IRPAgent may also actively send a notification to the IRPManager as required. In accordance with the above architecture, the network management system includes the IRPManager, while the managed system may include the IRPAgent and several managed NEs, or include the NEs integrated with the IRPAgents.

For network management of a 3G mobile communication network, a Network Measurement Center (NMC) plays the role of an IRPManager, a 3G NE device or an Operation and Maintenance Center (OMC) of the 3G NE device plays the role of an IRPAgent. Those skilled in the art should understand that the 3G NE device may include a 3G device provided by a provider. Generally, Itf-Ns are located between the NMC and the OMC and are provided from the OMC to the NMC. In this case, the interface between the OMC and the NE may be considered as an internal device interface and the type of the internal device interface is not limited. In other cases, the NMC may connect with some NE devices. These NE devices directly provide management interfaces to the NMC and these management interfaces between the NMC and the NEs may be considered as Itf-Ns.

According to 3GPP SA5, the basic functionalities of a network management interface include public management, configuration management, fault management, performance management and security management in a 3G mobile communication network. The security management function is mainly used for preventing an insecure usage of other functions such as the configuration management function and the performance management function, so that the management information in the managed system may not be uncontrollably exposed or the managed system may not be uncontrollably operated, thereby guaranteeing the integrity and confidentiality of the management information transmitted via the Itf-N. In addition, when an illegal intrusion occurs in the managed system, the security management function needs to report a message to the management system and stores the intrusion activity for subsequent security audit. Specifically, the specific security management function includes authorization services, authentication services, integrity protections, confidentiality protections and audit log services for the management system and the managed system.

Although the 3GPP SA5 defines the Itf-N security management function functionalities, specific solution about how to implement the Itf-N security management and how to implement each function has not been provided.

### Summary of the Invention

In view of the above, embodiments the present invention provide a system and a method for implementing security management in the operation and maintenance domain of a 3G mobile communication network, in which the 3GPP SA5 Itf-N supports basic functionalities of the security management.

A system for implementing security management in a 3G mobile communication network, wherein at least a pair of IRP manager (IRPManager) and IRP agent (IRPAgent) is included in a 3GPP SA5 Itf-N; the system further includes a security management service function, connected between the IRPManager and the IRPAgent and configured to provide a security service for the IRPManger and the IRPAgent.

Wherein the security management service function includes:
an authorization service module, configured to provide an authorization service;
an authentication service module, configured to provide an authentication service;
an integrity service module, configured to guarantee integrity of information transferred between the IRPManager and the IRPAgent;
a confidentiality service module, configured to guarantee confidentiality of the information transferred between the IRPManager and the IRPAgent;
an audit log service module, configured to record the successful or unsuccessful authorization, authentication, integrity, and confidentiality service and operation.

Wherein the security management service function entity further includes:
an IRPManager-side security management service function and an IRPAgent-side security management service function.

A method for implementing security management in a 3G mobile communication network may include:
receiving transmission information from an Integration Reference Point (IRP) manager (IRPManager) or an IRP agent (IRPAgent),
executing a security service for the transmission information if the transmission information needs the security service according to a preconfigured security strategy, and
sending the transmission information processed to the IRPAgent or the IRPManager;
wherein the security service includes at least one of an authorization service, an authentication service, an integrity protection, a confidentiality protection and an audit log service.

Wherein the transmission information includes operation information, notification information or file information.

The authorization service is implemented at an Object Request Broker (ORB) layer of an Interface-North (Itf-N), or at a transport layer of the Itf-N, or at both the ORB layer and the transport layer of the Itf-N.

The authentication service is implemented at the ORB layer of the Itf-N, or at an application layer of the Itf-N, or at both the ORB layer and the application layer of the Itf-N.

The integrity service is implemented at the transport layer of the Itf-N, or at the application layer of the Itf-N, or at both the transport layer and the application layer of the Itf-N.

The confidentiality service is implemented at the transport layer of the Itf-N, or at the application layer of the Itf-N, or at both the transport layer and the the application layer of the Itf-N.

The audit log service is implemented at the ORB layer of the Itf-N, or at the application layer of the Itf-N, or at both the ORB layer and the application layer of the Itf-N.

When the security service is an authorization service, the security management service function functions as a trusted third-party of IRPManager and IRPAgent, and establishes a reliable link between the IRPManager and the IRPAgent, and the method includes:
when sending a request to the IRPAgent, requesting, by the IRPManager, the IRPManager-side security management service function to authorize the IRPManager to create a first credential; before the IRPAgent receives the request, requesting, by the IRPAgent-side security management service function, to obtain the first credential of the IRPManager sending the request and verifying the first credential;
when sending a notification to the IRPManager, requesting, by the IRPAgent, the IRPAgent-side security management service function to authorize the IRPAgent to create a second credential; before the IRPManager receives the request, obtaining, by the IRPManager-side security management service function, the second credential of the IRPAgent and verifying the second credential.

When the security service is an audit log service, the method includes:
b1, starting an authorization procedure, and determining whether the authorization procedure is successful; if the authorization procedure is unsuccessful, determining whether to record an authorization failure log according to a preset security strategy; if it is necessary to record the authorization failure log, recording the authorization procedure and a failure result; if the authorization procedure is successful, determining whether to record an authorization successful log according to the preset security strategy; if it is necessary to record the authorization successful log, recording the authorization procedure and a successful result, and proceeding to Step b2; if it is unnecessary to record the authorization successful log, proceeding to Step b2 directly;
b2. starting an authentication procedure, and determining whether the authentication procedure is successful; if the authentication procedure is unsuccessful, determining whether to record an authentication failure log according to the preset security strategy; if it is necessary to record the authentication failure log, recording the authentication procedure; if the authentication procedure is successful, determining whether to record an authentication successful log according to the preset security strategy; if it is necessary to record the authentication successful log, recording the authentication procedure, and proceeding to Step b3; if it is unnecessary to record the authentication successful log, proceeding to Step b3 directly;
b3. starting an operation procedure, and determining whether the operation procedure is successful; if the operation procedure is unsuccessful, determining whether to record an operation failure log according to the preset security strategy; if it is necessary to record the operation failure log, recording the operation procedure; if the operation procedure is successful, determining whether to record an operation successful log according to the preset security strategy; if it is necessary to record the operation successful log, recording the operation procedure.

All IRPs of an Itf-N use one ORB; or, the IRPs the Itf-N having a similar security requirement use one ORB.

Different IRPs using one ORB adopt different security protection strategies.

In the above solution, all IRPs of an Itf-N use one ORB; or, the IRPs of an Itf-N having the similar security functionalities use one ORB. Different IRPs that use one ORB adopt different security protection strategies.

The solution provided by embodiments of the present invention has following features.
1) A security management service function is added to the Itf-N, so that it possible for the 3GPP SA5 Itf-N to implement the network security management. The integrity protection and the confidentiality protection of the information transferred on the Itf-N are implemented.
2) The security management service function in accordance with the embodiments of present invention is able to provide such five security services as authorization, authentication, integrity, confidentiality and audit log. Information transmitted between the IRPManager and the IRPAgent is processed by the security management service function which guarantees and improves the security reliability of the network management system.
3) The five security services provided by the security management service function in accordance with the embodiments of present invention may be randomly selected as required, which meets the implementation flexible and convenient implementation.
4) Each security service is given one preferable implementation scheme in accordance with the present invention, which makes it possible to give the security management embodiments of 3GPP SA5 Itf-N and perfect the network management technology of 3GPP SA5.
5) With respect to layers of the Itf-N, the procedure for processing each security service at different layers is given in detail. For one security service, the processing on different layers is optional in actual applications. The solution disclosed by embodiments of the present invention prefects the network management provided by 3GPP SA5 and is also simple and flexible.

### Brief Description of the Drawings

Figure 1 is a schematic diagram illustrating conventional network management system architecture of 3GPP SAS;
Figure 2 is a schematic diagram illustrating a network management system architecture of 3GPP SA5 in accordance with an embodiment of the present invention;
Figure 3 is a schematic diagram illustrating a security management service function in accordance with an embodiment of the present invention;
Figure 4 is a schematic diagram illustrating three Layers structure of 3GPP SA5 Itf-N;
Figure 5 is a flowchart for implementing security management in accordance with an embodiment of the present invention;
Figure 6 is a flowchart for implementing an audit log service in accordance with an embodiment of the present invention.

### Detailed Description of the Invention

According to embodiments of the present invention, a security management service function is added to the Itf-N. The security management service function provides such five security services as authorization, authentication, integrity, confidentiality and audit log. All the information transmitted between the IRPManager and the IRPAgent may pass through the security management service function and may be processed by different security services as required, so that the security management is performed on the 3GPP SA5 Itf-N. The security management service function may include an IRPManager-side security management service function and an IRPAgent-side security management service function.

As shown in Figure 2, a network management system for implementing security management in accordance with an embodiment of the present invention adds an IRPManager-side security management service function at the IRPManager side and adds an IRPAgent-side security management service function at the IRPAgent side. The IRPManager-side security management service function and the IRPAgent-side security management service function are together referred to as the security management service function which is configured on the Itf-N. The IRPManager and the IRPAgent interact information such as operation request, notification and file transmission via the security management service function. The operation request information and the file transmission information from the IRPManager are transmitted to the IRPAgent via the IRPManager-side security management service function and the IRPAgent-side security management service function. Similarly, the notification information from the IRPAgent is transmitted to the IRPManager via the IRPAgent-side security management service function and the IRPManager-side security management service function. The security management service function provides authorization services, integrity protections, confidentiality protections, authentication services and audit log services.

The security management service function may provide security services to the IRPManager and the IRPAgent respectively by configuring security strategies. The security management service function may also provide programming interfaces to the IRPManager and the IRPAgent to enable the IRPManager and the IRPAgent to use various security services by programming. The scheme of configuring the security strategy for the security management service function providing services may avoid modifying the existing IRPManager and IRPAgent; and the scheme of providing programming interfaces may also have little impact on the existing IRPManager and IRPAgent. However, if the IRPAgent needs to manage the IRPManager to access specific resources, for example, to access the resources indicated by a parameter of an interface operation, the IRPAgent needs to use access control components oriented to resources.

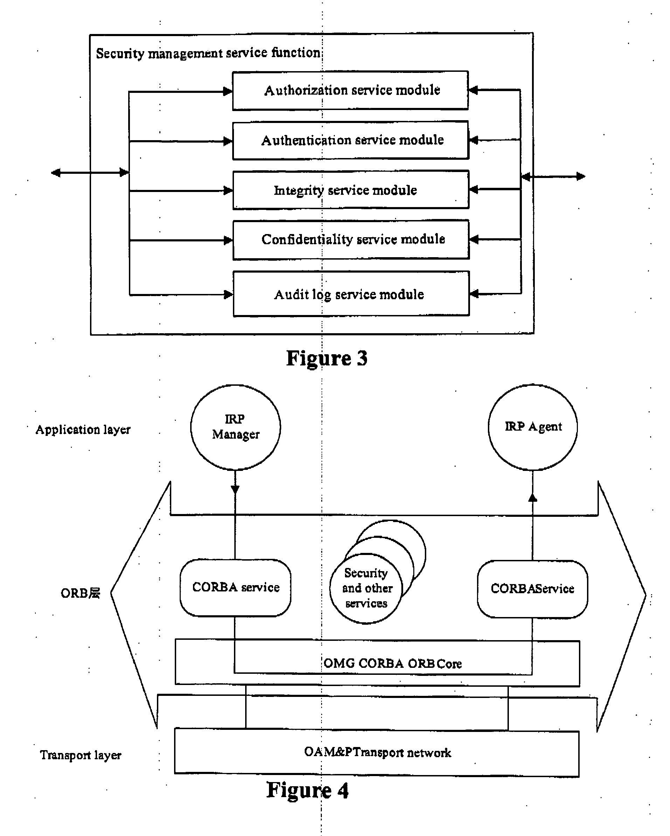

As shown in Figure 3, architecture of a security management service function may include an authorization service module, an authentication service module, an integrity service module, a confidentiality service module and an audit log service module. The authorization service module provides authorization services, the authentication service module provides authentication services, the integrity service module provides integrity services to guarantee the integrity of the information transmitted between the IRPManager and the IRPAgent, the confidentiality service module provides confidentiality services to guarantee the confidentiality of the information transmitted between the IRPManager and the IRPAgent, and the audit log service module provides security audit services for recording successful or unsuccessful authorization, authentication, integrity protection, confidentiality protection and operation. The authorization service module, authentication service module, integrity service module, confidentiality service module and audit log service module intercept the transmission information from or to the local side network entity, and a module for performing the security service required by the transmitted information initiates the security service and implements corresponding security management operation for the transmission information. The transmission information may include operation information, notification information and file transmission information.

With respect to any one of the authorization service module, the authentication service module, the integrity service module, the confidentiality service module and the audit log service module, the IRPManager-side security management service function and the IRPAgent-side security management service function may implement different functions of the module in different cases. For example, for the authorization service, if the IRPManager needs to authorize the IRPAgent, the IRPAgent-side security management service function needs to create a credential and send the credential to the IRPManager-side security management service function. The IRPManager-side security management service function needs to authorize the received credential and determine the authenticity of the IRPAgent. For another example, in terms of the integrity service and the confidentiality service, one side needs to execute an information encryption operation and the other side needs to execute an information decryption operation correspondingly.

All information transmitted between the IRPManager and the IRPAgent may be intercepted by the security management service function. The security management service function determines which kind of security service is required to be performed on the transmission information according to contents of the transmission information intercepted. The corresponding service module may directly initiate a security service to the transmission information. In this embodiment, which kind of security service is needed for the transmission information may be preconfigured. For example, if the transmission information is the operation information, the authorization, authentication and audit log services are needed; while if the transmission information is the file transmission information, the integrity service is needed.

Suppose the IRPManager manages the configuration of the IRPAgent, the authorization service, the authentication service and the audit log service are needed. When the IRPManager manages the configuration of the IRPAgent, configuration request and configuration information from the IRPManager pass through the IRPManager-side security management service function and the IRPAgent-side security management service function respectively. The authorization service module authorizes the information received. The authentication service module authenticates the information received. The audit log service module records whether the authorization, the authentication and operations related to the authorization and the authentication are successful, and records relevant information of failure reason if necessary. If the authorization, authentication and integrity protection are successful, the information from the IRPManager is transmitted to the IRPAgent, and the IRPAgent performs relevant operation on the information received. If the authorization, authentication and integrity detection are unsuccessful, the failure associated module of the security management service function returns failure information to the IRPManager and reject the request.

As shown in Figure 4, the Interface-North (Itf-N) is divided into three layers including the application layer, the Object Request Broker (ORB) layer and the transport layer, and the authorization service, the authentication service, the integrity service, the confidentiality service and the audit log service are respectively implemented on different layers. Alternatively, some security services may be implemented on two layers. For one security service, the implementations on various layers are independent from each other, thus the security service may be provided on both layers or only on one of them, as required. The security services are implemented on which layer as shown in Table 1, wherein "X" represents that the security service is permitted on this layer.

**Table 1**

| | Manager-side Authorization service | Authentication | Agent-side Authorization service | Integrity service | Confidentiality service | Audit log service |
|---|---|---|---|---|---|---|
| Application layer | | X | | X | X | X |
| ORB layer | X | X | X | | | X |
| Transport layer | X | | X | X | X | |

Note from Table 1 and Figure 4 that, the security management service function in accordance with the embodiment of the present invention may implement the authorization service, the integrity service and the confidentiality service at the transport layer, implement the authorization service, the authentication service and the audit log service at the ORB layer, and implement the authentication service and the audit log service as well as the integrity service and confidentiality service as required at the application layer.

Specifically, for the authorization service, the information may be authorized on the ORB layer by using Generic Security Services Username Password (GSSUP) mechanism and may be authorized on the transport layer by using ITU-T X.509 certification mechanism.

For the authentication service, on the ORB layer, the security management service function obtains an access identifier of an entity sending a request, obtains contents of the request, e.g. name of an operation requested, including name of an interface of the operation, and determines whether the entity sending the request has the authority to execute the operation requested according to a preconfigured access control list. On the application layer, the security management service function assists the IRPAgent with the authentication service. When the IRPAgent requests to perform the authentication service on the application layer, the security management service function provides the IRPAgent with the access identifier of the entity sending the request, the name of the operation requested and parameters of the operation requested, etc., so that the IRPAgent may perform an authentication according to the information provided by the security management service function and the preconfigured access control list.

For the integrity service, on the application layer, in the case that the integrity service is able to be implemented on the transport layer, the integrity service on the application layer may be provided together with the authentication service, since the authentication may guarantee that the information protected can not be accessed by an unauthorized IRPManager. However, in terms of some sensitive data, the integrity service provided on the application layer is still needed. In accordance with the requirement of security management service function, only XML format Active configuration files of Bulk Configuration Management IRP (Bulk CM IRP) needs the integrity protection on the application layer at present. The security management service function modifies the existing Active configuration file to implement the integrity protection of Bulk CM IRP by means of the XML signature technology without directly providing the Bulk CM IRP with the integrity protection of application layer. On the transport layer, the security management service function provides the integrity protection at the transport layer to the IRPManager and the IRPAgent by using the X.509 certification digital signature technology. When the integrity of the transmission information is destroyed, the security management service function throws an exception to the entity receiving the transmission information.

For the confidentiality service, on the application layer, in the case that the confidentiality service is able to be implemented on the transport layer, the confidentiality service on the application layer may be provided together with the authentication service, since the authentication may guarantee that the information protected can not be accessed by an unauthorized IRPManager. However, in terms of some sensitive data, the confidentiality service provided on the application layer is still needed. If the XML file transmitted between the IRPManager and the IRPAgent needs the confidentiality service at application layer, the XML encryption technology is used to implement the confidentiality protection for the XML file, and the security management service function assists in providing the confidentiality protection to the IRP. On the transport layer, the security management service function provides the confidentiality protection at the transport layer to the IRPManager and the IRPAgent by using the X.509 certification digital signature technology. When the confidentiality of the transmission information is destroyed, the security management service function throws an exception to the entity receiving the transmission information..

The audit log service provided from the security management service function to the IRPAgent may be implemented on the ORB layer. That is, when record condition of security audit log for an IRPAgent has been customized, the ORB automatically records the audit log and the IRPAgent does not participate the record procedure. The audit log service provided from the security management service function to the IRPAgent may also be implemented on the application layer, i.e. the security management service function provides an interface for writing the audit log record, and the IRPAgent may write a record in the audit log in the procedure of processing the IRPManager request.

The authorization service and the authentication service are implemented on the ORB layer based on Common Object Request Broker Architecture (CORBA) technology, thus the authorization service and the authentication service may also be considered as CORBA services. The CORBA technology is defined by a set of standards for defining distributed object system. The CORBA standard defines an Interface Definition Language and an Application Programming Interface (API), and activates the interaction between a client and a server by implementing the Object Request Broker (ORB). The ORB is a middleware for establishing the relationship of client/server between objects. By using the CORBA, the user may perform an operation without knowing the position where the platform of software and hardware is located as well as the user locates.

All the IRPs of an Itf-N may be provided security protection on the ORB layer and the application layer, and different IRPs may have different security protection strategies on the ORB layer and the application layer. However, all instances of one IRP must possess the same security protection strategy in the whole communication system. For example:
1) All Itf-N IRPs use one ORB and apply the same ORB-layer security strategy. However different IRPs are defined with different security protection strategies. Particularly, some IRPs may use no security strategy. For example, the security protection strategy defined for IRP1 is to execute the authentication for the get operation and the set operation when some network resources are accessed; while the security protection strategy defined for IRP2 is to execute the authorization for the set operation when some network resources are accessed. The ORB-layer security strategy is to authorize the IRPManager and the IRPAgent using the GSSUP mechanism and authenticate all operations, for example, grant all the operations of IRP1 and IRP2 while inhibiting the operations of IRP3.
2) The Itf-N IRPs that need similar security requirements use one ORB, and each ORB applies the security strategy thereof. The Itf-N IRPs that need different security requirements use different ORBS, and the IRPs using the same ORB apply the security protection strategy thereof. Particularly, some IRPs of the ORB may apply no application-layer security strategy.

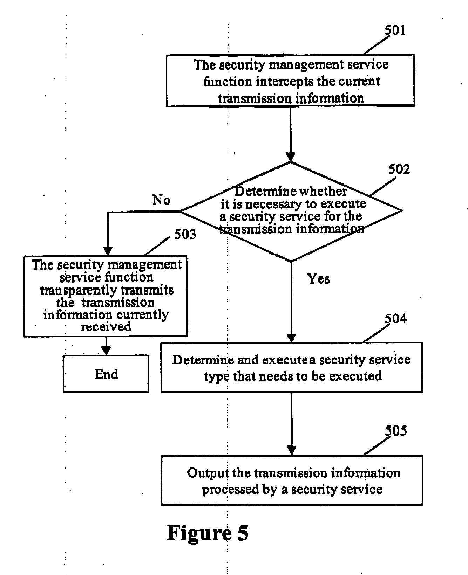

As shown in Figure 5, based on the above system for implementing the Itf-N network security management, i.e., based on the security management service function set for the Itf-N, a method for implementing the network security management in accordance with an embodiment of the present invention may include the followings.

Steps 501 to 503: the security management service function intercepts transmission information from the IRPManager or the IRPAgent, and determines whether it is necessary to provide a security service for the transmission information according to preconfigured security strategies and contents of the transmission information. If it is necessary to provide the security service for the transmission information, continues with Step 504; otherwise, transparently transmits the transmission. The transmission information may include at least one of operation information, notification information and file transmission information.

Steps 504 and 505: the security management service function determines and executes security services required by the transmission information according to the contents of the transmission information. For example, authorization, authentication and audit log services are preformed if the transmission information is the operation information; the integrity service is performed if the transmission information is the file transmission information; etc. The security management service function then sends the transmission information processed to the IRPAgent or the IRPManager.

The security service executed in Step 504 includes an authorization service, an authentication service, an integrity service, a confidentiality service, an audit log service or any combination of the five services. In addition, the operations performed by the security management service function include the operations of the IRPAgent-side security management service function and the IRPManager-side security management service function in actual conditions. For example, at transmitting side, the security management service function performs the security service for the transmission information received, and modifies the transmission information or attaches new information to the transmission information. At receiving side, the security management service function performs the relevant security service for the received transmission information, recovers original transmission information, and executes the relevant processing according to the content of transmission information. If the integrity service and the confidentiality service are executed and the transmission information needs to be encrypted and modified at the transmitting side, the receiving side may knows that the currently executed security service is the integrity service and the confidentiality service according to the executed security service type or the preconfigured security strategy, and needs to decrypt and recover the transmission information. For another example, if the authorization service is performed, the transmitting side needs to attach a credential to the transmission information, and correspondingly, the receiving side determines that the currently executed security service is the authorization service, extracts the credential from the transmission information received, and verifies the credential to determine the authenticity of the transmitting side.

Actually, each security service has at least one implementation scheme. In the embodiments of the present invention, the authorization service is implemented by using the solution that, the security management service function functions as a trusted third-party between the IRPManager and the IRPAgent, helps the IRPManager and the IRPAgent to authorize each other. That is, the solution is to establish a reliable link between the IRPManager and the IRPAgent using the security management service function. The implementation of the authorization service may include followings.

When sends a request to the IRPAgent, the IRPManager requests the IRPManager-side security management service function to authorize the IRPManager itself to create a credential. Before the IRPAgent receives the request, the IRPAgent-side security management service function requests for the credential of the IRPManager sending the request and verifies the credential. If the credential passes the verification, the IRPManager is authorized.

When sends a notification to the IRPManager, the IRPAgent requests the IRPAgent-side security management service function to authorize the IRPAgent itself to create a credential. Before the IRPManager receives the request, the IRPManager-side security management service function obtains the credential of the IRPAgent and verifies the credential. If the credential passes the verification, the IRPAgent is authorized.

For the authorization service, when the security management service function provides the authorization service by configuring security strategies, the procedure of the authorization service is invisible to the IRPManager and the IRPAgent. When the security management service function provides the authorization service by programming, the implementation of the authorization service needs to be requested by the IRPManager and the IRPAgent

In accordance with embodiments of the present invention, the authentication service may be implemented by using the solution that the security management service function provides the authentication service to the IRPAgent. When receives a request from the IRPManager, the IRPAgent requests the security management service function to authorize the IRPManager. The authentication process may include: the IRPAgent-side security management service function obtaining an identifier of the IRPManager from the credential of IRPManager, searching an access control list and determining whether the IRPManager has an authority to execute the requested operation.

In accordance with embodiments of the present invention, the audit log service may be implemented by using the solution that, when the IRPAgent receives a request from the IRPManager, the security management service function records the procedure and result of authorizing the IRPManager by the IRPAgent. If the authorization is successful, it is necessary to record the procedure and result of authenticating the IRPManager by the IRPAgent. And if the authentication is successful, it is necessary to record the procedure and result of executing the IRPManager request by the IRPAgent.

The security management service function may also provide the IRPAgent with a tool for customizing audit logs to grant the IRPAgent to customize the procedures that need audit logs. For example, grant the IRPAgent to record the successful or unsuccessful authorization procedure; grant the IRPAgent to record the successful or unsuccessful authentication procedure; grant the IRPAgent to record the successful or unsuccessful procedure for executing an operation; grant the IRPAgent to record the designated procedure for executing a set of operations; or grant the IRPAgent to record the procedures for executing any combination of the above.

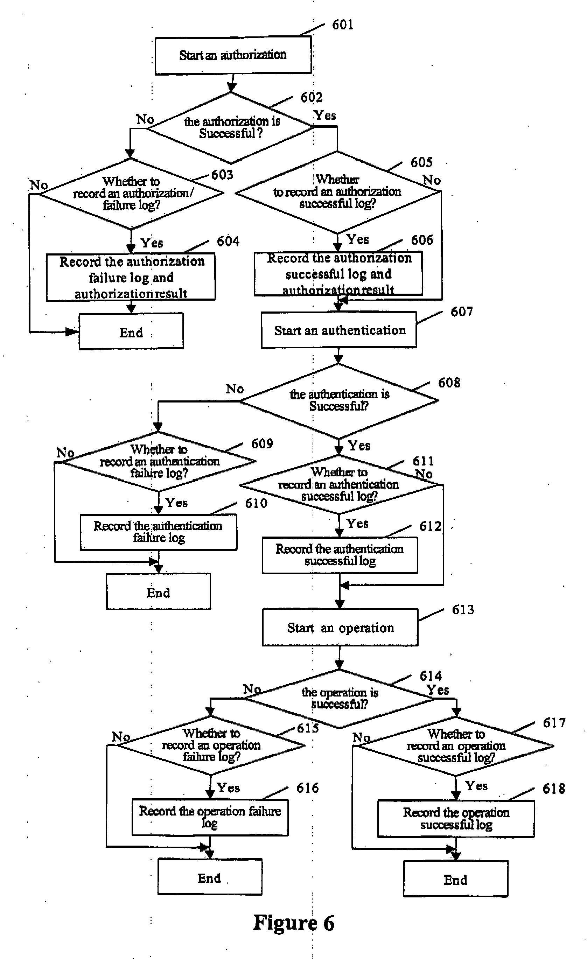

As shown in Figure 6, after the IRPAgent receives the request from the IRPManager, the procedure of implementing the audit log service may include the followings:
Steps 601 and 602, perform an authorization procedure, and determine whether the authorization is successful. If the authorization is successful, continue with Step 605; otherwise, continue with Step 603.
Steps 603 and 604, determine whether an authorization failure log is needed to be recorded according to preconfigured security strategies. If the authorization failure log is needed, record the authorization failure procedure and the failure result. The security strategy may include the record condition of the audit log, such as which information or procedure is needed, which information or procedure is granted, etc.
Steps 605 and 606: determine whether it needs to record an authorization success log according to preconfigured security strategies. If the authorization success log is needed, record the authorization success procedure and the failure result, and proceed to Step 607; otherwise, proceed to Step 607 directly.
Steps 607 and 608: perform an authentication procedure and determine whether the authentication is successful. If the authentication is successful, proceed to Step 611; otherwise, proceed to Step 609.
Steps 609 and 610: determine whether it needs to record an authentication failure log according to preconfigured security strategies. If the authentication failure log is needed, record the authentication failure procedure.
Steps 611 and 612: determine whether it needs to record an authentication success log according to preconfigured security strategies. If the authentication success log is needed, record the authentication success procedure, and proceed to Step 613; otherwise, proceed to Step 613 directly.
Steps 613 and 614: perform an operation executing procedure and determine whether the operation executing procedure is successful. If the operation executing procedure is successful, proceed to Step 617; otherwise, proceed to Step 615.
Steps 615 and 616: determine whether an operation failure log is granted according to the preconfigured security strategies. If the operation failure log is granted, record the operation failure procedure.
Steps 617 and 618: determine whether an operation success log is granted according to the preconfigured security strategies. If the operation success log is granted, record the operation success procedure.

If the confidentiality service and/or the integrity service are executed between the IRPManager and the IRPAgent, the audit log service may also record the successful or failure procedure of executing the confidentiality service and/or the integrity service according to the preconfigured security strategies. That is, the processes of recording the successful procedure and/or the failure procedure may be customized in advance. Correspondingly, the followings may be added in the procedure as shown in Figure 6.

Start a confidentiality service procedure, and determine whether the confidentiality service is successful. If the confidentiality service is successful, determine whether it is necessary to record a confidentiality service successful log according to the preconfigured security strategies. If it is necessary to record the confidentiality service successful log, record the confidentiality service successful procedure, and proceed to subsequent processes; otherwise, proceed to subsequent processes directly. If the confidentiality service is failed, determine whether it is necessary to record a confidentiality service failure log according to the preconfigured security strategies. If it is necessary to record the confidentiality service failure log, record the confidentiality service failure procedure.

Similarly, the processes related to the integrity service and/ or related to the confidentiality service may be added.

Though the present invention has been illustrated and described by some preferred embodiments, those skilled in the art should understand that various changes may be made in form and detail without departing from the scope of the present invention and therefore should be covered in the protection scope of the present invention assigned by the appended claims.

## Claims

1. A system for implementing security management in a 3G mobile communication network, whereinat least a pair of Integration Reference Point IRP manager (IRPManager) and IRP agent (IRPAgent) is included in a 3GPP SA5 Itf-N; the system is **characterized by** :
a security management service function, connected between the IRPManager and the IRPAgent and configured to provide a security service for the IRPManger and the IRPAgent.

2. The system of claim 1, wherein the security management service function comprises:
an authorization service module, configured to authorize the IRPManger and/or the IRPAgent;
an authentication service module, configured to authenticate the IRPManger and/or the IRPAgent; an integrity service module, configured to guarantee integrity of information transmitted between the IRPManager and the IRPAgent; a confidentiality service module, configured to guarantee confidentiality of information transmitted between the IRPManager and the IRPAgent; and
an audit log service module, configured to record an authorization result of the authorization service module an authentication result of the authentication service module, an integrity protection result of the integrity service module and a confidentiality protection result of the confidentiality service module.

3. The system of Claim 1 or 2, wherein the security management service function entity further comprises:
an IRPManager-side security management service function and an IRPAgent-side security management service function;
an integrity service module, configured to guarantee integrity of information transmitted between the IRPManager and the IRPAgent; and
wherein the audit log service module is further configured to record a integrity protection result of the integrity service module.

4. A method for implementing security management in a 3G mobile communication network, comprising:
receiving transmission information from one of Integration Reference Point (IRP) manager (IRPManager) and an IRP agent (IRPAgent),
**characterized by**
executing a security service for the transmission information if the transmission information needs the security service according to a preconfigured security strategy, and
sending the transmission information processed to the other one of the IRPAgent and the IRPManager;
wherein the security service comprises at least one of an authorization service, an authentication service, an integrity protection, a confidentiality protection and an audit log service.

5. The method of claim 4, wherein the transmission information comprises: operation information, notification information or file information.

6. The method of claim 4, wherein the authorization service is implemented at an Object Request Broker (ORB) layer of an Interface-North (Itf-N), or at a transport layer of the Itf-N, or at both the ORB layer and the transport layer of the Itf-N.

7. The method of claim 4, wherein the authentication service is implemented at the ORB layer of the Itf-N, or at an application layer of the Itf-N, or at both the ORB layer and the application layer of the Itf-N.

8. The method of claim 4, wherein the integrity service is implemented at the transport layer of the Itf.N, or at the application layer of the Itf-N, or at both the transport layer and the application layer of the Itf-N.

9. The method of claim 4, wherein the confidentiality service is implemented at the transport layer of the Itf-N, or at the application layer of the Itf-N, or at both the transport layer and the application layer of the Itf-N.

10. The method of claim 4, wherein the audit log service is implemented at the ORB layer of the Itf-N, or at the application layer of the Itf-N, or at both the ORB layer and the application layer of the Itf-N.

11. The method of claim 4 or 6, wherein the executing the security service comprises:
receiving an authorization request from the IRPManager or the IRPAgent;
creating a credential for the IRPManager or the IRPAgent;
acquiring the credential and verifying the credential.

12. The method of claim 4 or 10, wherein the security service is an audit log service, the method comprises:
b1. starting an authorization procedure, and determining whether the authorization procedure is successful; if the authorization procedure is unsuccessful, determining whether to record an authorization failure log according to a preset security strategy; if it is necessary to record the authorization failure log, recording the authorization procedure and a failure result; if the authorization procedure is successful, determining whether to record an authorization successful log according to the preset security strategy; if it is necessary to record the authorization successful log, recording the authorization procedure and a successful result, and proceeding to Step b2; if it is unnecessary to record the authorization successful log, proceeding to Step b2 directly;
b2. starting an authentication procedure, and determining whether the authentication procedure is successful; if the authentication procedure is unsuccessful, determining whether to record an authentication failure log according to the preset security strategy; if it is necessary to record the authentication failure log, recording the authentication procedure; if the authentication procedure is successful, determining whether to record an authentication successful log according to the preset security strategy; if it is necessary to record the authentication successful log, recording the authentication procedure, and proceeding to Step b3; if it is unnecessary to record the authentication successful log, proceeding to Step b3 directly;
b3. starting an operation procedure, and determining whether the operation procedure is successful; if the operation procedure is unsuccessful, determining whether to record an operation failure log according to the preset security strategy; if it is necessary to record the operation failure log, recording the operation procedure; if the operation procedure is successful, determining whether to record an operation successful log according to the preset security strategy; if it is necessary to record the operation successful log, recording the operation procedure.

13. The method of any one of claims 4 to 10, wherein all IRPs of an Itf-N use one ORB; or, the IRPs of the Itf-N having a same security requirement use one ORB.

14. The method of claim 13, wherein different IRPs using one ORB adopt different security protection strategies.

## Patentansprüche

1. System zum Implementieren von Sicherheitsverwaltung in einem 3G-Mobilkommunikationsnetz, wobei mindestens ein Paar aus einem Manager des Integration Reference Point bzw. IRP (IRPManager) und einem IRP-Agent (IRPAgent) in einer 3GPP SA5 Itf-N enthalten ist; wobei das System durch Folgendes **gekennzeichnet** ist:
eine zwischen den IRPManager und den IRPAgent geschaltete Sicherheitsverwaltungs-Dienstfunktion, die dafür ausgelegt ist, einen Sicherheitsdienst für den IRPManager und den IRPAgent bereitzustellen.

2. System nach Anspruch 1, wobei die Sicherheitsverwaltungs-Dienstfunktion Folgendes umfasst:
ein Autorisierungs-Dienstmodul, das dafür ausgelegt ist, den IRPManager und/oder den IRPAgent zu autorisieren;
ein Authentifikations-Dienstmodul, das dafür ausgelegt ist, den IRPManager und/oder den IRPAgent zu authentifizieren; ein Integritäts-Dienstmodul, das dafür ausgelegt ist, Integrität von zwischen dem IRPManager und dem IRPAgent übertragenen Informationen zu garantieren; ein Vertraulichkeits-Dienstmodul, das dafür ausgelegt ist, Vertraulichkeit von zwischen dem IRPManager und dem IRPAgent übertragenen Informationen zu garantieren; und
ein Audit-Log-Dienstmodul, das dafür ausgelegt ist, ein Autorisierungsergebnis des Autorisierungs-Dienstmoduls, ein Authentifikationsergebnis des Authentifikations-Dienstmoduls, ein Integritätsschutzergebnis des Integritäts-Dienstmoduls und ein Vertraulichkeits-Schutzergebnis des Vertraulichkeits-Dienstmoduls aufzuzeichnen.

3. System nach Anspruch 1 oder 2, wobei die Sicherheitsverwaltungs-Dienstfunktionsentität ferner Folgendes umfasst:
eine IRPManager-seitige Sicherheitsverwaltungs-Dienstfunktion und eine IRPAgentseitige Sicherheitsverwaltungs-Dienstfunktion;
ein Integritäts-Dienstmodul, das dafür ausgelegt ist, Integrität von zwischen dem IRPManager und dem IRPAgent übertragenen Informationen zu garantieren; und
wobei das Audit-Log-Dienstmodul ferner dafür ausgelegt ist, ein Integritätsschutzergebnis des Integritäts-Dienstmoduls aufzuzeichnen.

4. Verfahren zum Implementieren von Sicherheitsverwaltung in einem 3G-Mobilkommunikationsnetz, umfassend:
Empfangen von Übertragungsinformationen von einem eines Managers des Integration Reference Point IRP (IRPManager) und eines IRP-Agenten (IRPAgent),
**gekennzeichnet durch**
Ausführen eines Sicherheitsdienstes für die Übertragungsinformationen, wenn die Übertragungsinformationen den Sicherheitsdienst gemäß einer vorkonfigurierten Sicherheitsstrategie benötigen, und
Senden der verarbeiteten Übertragungsinformationen zu dem anderen des IRPAgent und des IRPManager;
wobei der Sicherheitsdienst mindestens eine der folgenden Alternativen umfasst: einen Autorisierungsdienst, einen Authentifikationsdienst, einen Integritätsschutz, einen Vertraulichkeitsschutz und einen Audit-Log-Dienst.

5. Verfahren nach Anspruch 4, wobei die Übertragungsinformationen Folgendes umfassen: Operationsinformationen, Benachrichtigungsinformationen oder Dateiinformationen.

6. Verfahren nach Anspruch 4, wobei der Autorisierungsdienst in einer Schicht des Object Request Broker ORB einer Interface-North Itf-N oder in einer Transportschicht der Itf-N oder sowohl in der ORB-Schicht als auch der Transportschicht der Itf-N implementiert wird.

7. Verfahren nach Anspruch 4, wobei der Authentifikationsdienst in der ORB-Schicht der Itf-N oder in einer Anwendungsschicht der Itf-N oder sowohl in der ORB-Schicht als auch in der Anwendungsschicht der Itf-N implementiert wird.

8. Verfahren nach Anspruch 4, wobei der Integritätsdienst in der Transportschicht der Itf-N oder in der Anwendungsschicht der Itf-N oder sowohl in der Transportschicht als auch in der Anwendungsschicht der Itf-N implementiert wird.

9. Verfahren nach Anspruch 4, wobei der Vertraulichkeitsdienst in der Transportschicht der Itf-N oder in der Anwendungsschicht der Itf-N oder sowohl in der Transportschicht als auch in der Anwendungsschicht der Itf-N implementiert wird.

10. Verfahren nach Anspruch 4, wobei der Audit-Log-Dienst in der ORB-Schicht der Itf-N oder in der Anwendungsschicht der Itf-N oder sowohl in der ORB-Schicht als auch in der Anwendungsschicht der Itf-N implementiert wird.

11. Verfahren nach Anspruch 4 oder 6, wobei das Ausführen des Sicherheitsdienstes Folgendes umfasst:
Empfangen einer Autorisierungsanforderung von dem IRPManager oder dem IRPAgent;
Erzeugen eines Berechtigungsnachweises für den IRPManager oder den IRPAgent;
Beschaffen des Berechtigungsnachweises und Verifizieren des Berechtigungsnachweises.

12. Verfahren nach Anspruch 4 oder 10, wobei der Sicherheitsdienst ein Audit-Log-Dienst ist und das Verfahren Folgendes umfasst:
b1. Starten einer Autorisierungsprozedur und Bestimmen, ob die Autorisierungsprozedur erfolgreich ist; wenn die Autorisierungsprozedur nicht erfolgreich ist, Bestimmen, ob ein Autorisierungs-Fehlschlag-Log aufzuzeichnen ist, gemäß einer voreingestellten Sicherheitsstrategie; wenn es notwendig ist das Autorisierungs-Fehlschlag-Log aufzuzeichnen, Aufzeichnen der Autorisierungsprozedur und eines Fehlschlagergebnisses; wenn die Autorisierungsprozedur erfolgreich ist, Bestimmen, ob ein Autorisierung-Erfolgreich-Log aufzuzeichnen ist, gemäß der voreingestellten Sicherheitsstrategie; wenn es notwendig ist, das Autorisierung-Erfolgreich-Log aufzuzeichnen, Aufzeichnen der Autorisierungsprozedur und eines Erfolgreich-Ergebnisses und Weitergehen zu Schritt b2; wenn es nicht notwendig ist, das Autorisierung-Erfolgreich-Log aufzuzeichnen, direktes Weitergehen zu Schritt b2;
b2. Starten einer Authentifikationsprozedur und Bestimmen, ob die Authentifikationsprozedur erfolgreich ist; wenn die Authentifikationsprozedur nicht erfolgreich ist, Bestimmen, ob ein Authentifikations-Fehlschlag-Log aufzuzeichnen ist, gemäß der voreingestellten Sicherheitsstrategie; wenn es notwendig ist, das Authentifikations-Fehlschlag-Log aufzuzeichnen, Aufzeichnen der Authentifikationsprozedur; wenn die Authentifikationsprozedur erfolgreich ist, Bestimmen, ob ein Authentifikation-Erfolgreich-Log aufzuzeichnen ist, gemäß der voreingestellten Sicherheitsstrategie; wenn es notwendig ist, das Authentifikation-Erfolgreich-Log aufzuzeichnen, Aufzeichnen der Authentifikationsprozedur und Weitergehen zu Schritt b3; wenn es nicht notwendig ist, das Authentifikation-Erfolgreich-Log aufzuzeichnen, direktes Weitergehen zu Schritt b3;
b3. Starten einer Operationsprozedur und Bestimmen, ob die Operationsprozedur erfolgreich ist; wenn die Operationsprozedur nicht erfolgreich ist, Bestimmen, ob ein Operations-Fehlschlag-Log aufzuzeichnen ist, gemäß der voreingestellten Sicherheitsstrategie; wenn es notwendig ist, das Operations-Fehlschlag-Log aufzuzeichnen, Aufzeichnen der Operationsprozedur; wenn die Operationsprozedur erfolgreich ist, Bestimmen, ob ein Operation-Erfolgreich-Log aufzuzeichnen ist, gemäß der voreingestellten Sicherheitsstrategie; wenn es notwendig ist, das Operation-Erfolgreich-Log aufzuzeichnen, Aufzeichnen der Operationsprozedur.

13. Verfahren nach einem der Ansprüche 4 bis 10, wobei alle IRPs einer Itf-N einen ORB verwenden; oder
die IRPs der Itf-N, die eine selbe Sicherheitsanforderung aufweisen, einen ORB benutzen.

14. Verfahren nach Anspruch 13, wobei verschiedene IRPs, die einen ORB verwenden, verschiedene Sicherheitsschutzstrategien annehmen.

## Revendications

1. Système de mise en oeuvre d'une gestion de sécurité dans un réseau de communication mobile 3G, dans lequel au moins une paire de gestionnaire de Point de Référence d'Intégration IRP (IRPManager) et d'agent IRP (IRPAgent) est incluse dans une 3GPP SA5 Itf-N ; le système étant **caractérisé par** :
une fonction de service de gestion de sécurité, connectée entre l'IRPManager et
l'IRPAgent et configurée pour assurer un service de sécurité pour l'IRPManager et l'IRPAgent.

2. Système selon la revendication 1, dans lequel la fonction de service de gestion de sécurité comprend :
un module de service d'autorisation, configuré pour autoriser l'IRPManager et/ou l'IRPAgent ;
un module de service d'authentification, configuré pour authentifier l'IRPManager et/ou l'IRPAgent ; un module de service d'intégrité, configuré pour garantir l'intégrité des informations transmises entre l'IRPManager et l'IRPAgent ; un module de service de confidentialité, configuré pour garantir la confidentialité des informations transmises entre l'IRPManager et l'IRPAgent ; et
un module de service de consignation d'audit, configuré pour enregistrer un résultat d'autorisation du module de service d'autorisation, un résultat d'authentification du module de service d'authentification, un résultat de protection d'intégrité du module de service d'intégrité et un résultat de protection de confidentialité du module de service de confidentialité.

3. Système selon la revendication 1 ou 2, dans lequel l'entité de fonction de service de gestion de sécurité comprend en outre :
une fonction de service de gestion de sécurité côté IRPManager et une fonction de service de gestion de sécurité côté IRPAgent ;
un module de service d'intégrité, configuré pour garantir l'intégrité des informations transmises entre l'IRPManager et l'IRPAgent ; et
dans lequel le module de service de consignation d'audit est configuré en outre pour enregistrer un résultat de protection d'intégrité du module de service d'intégrité.

4. Procédé de mise en oeuvre d'une gestion de sécurité dans un réseau de communication mobile 3G, comprenant :
la réception d'informations transmises depuis l'un d'un gestionnaire de Point de Référence d'Intégration (IRP) (IRPManager) et d'un agent IRP (IRPAgent),
**caractérisé par**
l'exécution d'un service de sécurité sur les informations transmises si les informations transmises nécessitent le service de sécurité en fonction d'une stratégie de sécurité préconfigurée, et
l'envoi des informations transmises traitées à l'autre de l'IRPAgent et de l'IRPManager ;
dans lequel le service de sécurité comprend au moins l'un d'un service d'autorisation, d'un service d'authentification, d'une protection d'intégrité, d'une protection de confidentialité et d'un service de consignation d'audit.

5. Procédé selon la revendication 4, dans lequel les informations transmises comprennent : des informations d'exploitation, des informations de notification ou des informations de fichier.

6. Procédé selon la revendication 4, dans lequel le service d'autorisation est mis en oeuvre au niveau d'une couche de Courtage de Requête d'Objet (Object Request Broker, ORB) d'une Interface Nord (Itf-N), ou d'une couche transport de l'Itf-N, ou à la fois au niveau de la couche ORB et de la couche transport de l'Itf-N.

7. Procédé selon la revendication 4, dans lequel le service d'authentification est mis en oeuvre au niveau de la couche ORB de l'Itf-N, ou au niveau d'une couche application de l'Itf-N, ou à la fois au niveau de la couche ORB et de la couche application de l'Itf-N.

8. Procédé selon la revendication 4, dans lequel le service d'intégrité est mis en oeuvre au niveau de la couche transport de l'Itf-N, ou au niveau de la couche application de l'Itf-N, ou à la fois au niveau de la couche transport et de la couche application de l'Itf-N.

9. Procédé selon la revendication 4, dans lequel le service de confidentialité est mis en oeuvre au niveau de la couche transport de l'Itf-N, ou au niveau de la couche application de l'Itf-N, ou à la fois au niveau de la couche transport et de la couche application de l'Itf-N.

10. Procédé selon la revendication 4, dans lequel le service de consignation d'audit est mis en oeuvre au niveau de la couche ORB de l'Itf-N, ou au niveau de la couche application de l'Itf-N, ou à la fois au niveau de la couche ORB et de la couche application de l'Itf-N.

11. Procédé selon la revendication 4 ou 6, dans lequel l'exécution du service de sécurité comprend :
la réception d'une requête d'autorisation depuis l'IRPManager ou l'IRPAgent ;
la création d'un justificatif d'identité de l'IRPManager ou l'IRPAgent ;
l'acquisition du justificatif d'identité et la vérification du justificatif d'identité.

12. Procédé selon la revendication 4 ou 10, dans lequel le service de sécurité est un service de consignation d'audit, le procédé comprenant :
b1. le lancement d'une procédure d'autorisation, et la détermination que la procédure d'autorisation réussit ou non ; si la procédure d'autorisation échoue, la détermination qu'il convient ou non de consigner l'échec de l'autorisation en fonction d'une stratégie de sécurité préétablie ; s'il convient de consigner l'échec de l'autorisation, l'enregistrement de la procédure d'autorisation et d'un résultat négatif ; si la procédure d'autorisation réussit, la détermination qu'il convient ou non de consigner la réussite de l'autorisation en fonction de la stratégie de sécurité préétablie ; s'il convient de consigner la réussite de l'autorisation, l'enregistrement de la procédure d'autorisation et d'un résultat positif, et le passage à l'étape b2 ; s'il ne convient pas de consigner la réussite de l'autorisation, le passage direct à l'étape b2 ;
b2. le lancement d'une procédure d'authentification, et la détermination que la procédure d'authentification réussit ou non ; si la procédure d'authentification échoue, la détermination qu'il convient ou non de consigner l'échec de l'authentification en fonction de la stratégie de sécurité préétablie ; s'il convient de consigner l'échec de l'authentification, l'enregistrement de la procédure d'authentification ; si la procédure d'authentification réussit, la détermination qu'il convient ou non de consigner la réussite de l'authentification en fonction de la stratégie de sécurité préétablie ; s'il convient de consigner la réussite de l'authentification, l'enregistrement de la procédure d'authentification, et le passage à l'étape b3 ; s'il ne convient pas de consigner la réussite de l'authentification, le passage direct à l'étape b3 ;
b3. le lancement d'une procédure d'exploitation, et la détermination que la procédure d'exploitation réussit ou non ; si la procédure d'exploitation échoue, la détermination qu'il convient ou non de consigner l'échec de l'exploitation en fonction de la stratégie de sécurité préétablie ; s'il convient de consigner l'échec de l'exploitation, l'enregistrement de la procédure d'exploitation ; si la procédure d'exploitation réussit, la détermination qu'il convient ou non de consigner la réussite de l'exploitation en fonction de la stratégie de sécurité préétablie ; s'il convient de consigner la réussite de l'exploitation, l'enregistrement de la procédure d'exploitation.

13. Procédé selon l'une quelconque des revendications 4 à 10, dans lequel tous les IRP d'une Itf-N utilisent une même ORB ; ou les IRP de l'Itf-N ayant un même besoin de sécurité utilisent une même ORB.

14. Procédé selon la revendication 13, dans lequel des IRP différents utilisant une même ORB adoptent différentes stratégies de protection de sécurité.
